# EUROPÄISCHE PATENTANMELDUNG

(11) **EP 1 043 174 A2**
(43) Veröffentlichungstag der Anmeldung: **11.10.2000**
(21) Anmeldenummer: 00106018.5
(22) Anmeldetag: 28.03.2000
(51) Int. Cl.: B44C 1/10, C09J 7/02

(54) **Mit einem Flächendekor versehener Trägerflächenabschnitt**

(30) Priorität: 09.04.1999 DE 19916062
(71) Anmelder: BAYER AG, 51368 Leverkusen (DE)
(72) Erfinder: Storch, Dirk, 51065 Köln (DE); Müller, Hanns-Peter, 51519 Odenthal (DE); Müller, Heino, 51377 Leverkusen (DE); Kijlstra, Johan Dr., 51467 Bergisch Gladbach (DE)

(57) **Zusammenfassung**

Es wird eine mit einem Flächendekor versehene Trägerfläche beschrieben, wobei zwischen Trägerfläche und Dekorfläche eine abziehbare Lackschicht aus colöserfreien, wäßrigen, anionischen Polyurethan-Polyharnstoffdispersionen angeordnet ist.

## Beschreibung

Die vorliegende Erfindung betrifft einen mit einem Flächendekor versehenen Trägerflächenabschnitt.

Eine Vielzahl von Gegenständen in Handel und Gewerbe, der Werbung und im häuslichen Gebrauch werden vorübergehend mit flächigen Kennzeichnungen oder Dekoren versehen, die nach Erfüllung ihres Zweckes wieder entfernt werden müssen. Bei derartigen Kennzeichnungen oder Dekoren kann es sich um Werbehinweise, Inbetriebnahmevorschriften, Verkaufshinweise (wie Preisangaben) oder Hinweise auf Produkteigenschaften handeln, ferner um Hinweisschilder (wie Straßenverkehrsschilder) mit temporär verändertem Inhalt oder auch für die vorübergehende Nutzung von Außen- und Innenflächen von Verkehrsmitteln für Werbezwecke.

Für derartige Zwecke werden häufig bedruckte Klebefolien oder Klebeetiketten z.B. aus PVC oder Papier mit einem zähflüssigen Klebefilm eingesetzt. Die Entfernung derartiger Folien oder Etiketten ist nicht unproblematisch, da der zähflüssige Klebefilm häufig an der Trägerfläche des gekennzeichneten bzw. dekorierten Gegenstandes haftenbleibt und nur durch Einsatz von Lösungsmitteln vollständig entfernt werden kann. Ferner kann es aufgrund der in dem Klebefilm vorhandenen Lösungsmittel zu Veränderungen der Oberfläche des gekennzeichneten Gegenstandes kommen.

Erfindungsgemäß wird nun vorgeschlagen, zwischen dem flächigen Dekor bzw. der Kennzeichnung und der Trägerfläche, auf der dieses angebracht wird, eine abziehbare Lackschicht vorzusehen.

Gegenstand der Erfindung sind demgemäß mit einem Flächendekor versehene Trägerflächenabschnitte, die eine zwischen Trägerfläche und Dekorfläche angeordnete, von der Trägerfläche abziehbare Lackschicht aufweisen. Geeignete Trägerflächen sind beispielsweise Glas-, Metall-, Holz- oder Kunststoff-Flächen oder lackierte oder emaillierte Oberflächen, Papier, Pappe, Leder.

Derartige Oberflächen aufweisende Gegenstände können sein: Fensterscheiben, Spiegel, Möbel, Haushaltsgeräte, Kraftfahrzeuge, Verkehrsschilder, Werbetafeln, Disketten, Bücher, Koffer usw.

Geeignete Lacke zur Erzeugung der abziehbaren Lackschicht sind solche, die adhäsiv auf der Trägerfläche haften und die frei von organischen Lösungsmitteln sind und daher die Trägerfläche nicht angreifen.

Insbesondere geeignete Lacke zur Erzeugung der abziehbaren Lackschichten sind in der EP-A 849 298 offenbart.

Dabei handelt es sich um Beschichtungsmittel, bestehend aus colöserfreien wäßrigen, anionischen Dispersionen von Polyurethan-Polyharnstoffen, deren Festkörper das zumindest teilweise in der Salzform vorliegende Umsetzungsprodukt aus
a) einem NCO-Prepolymer aus
   i) 20 bis 60 Gew.-% eines Diisocyanates, ausgewählt aus der Gruppe der aliphatischen Diisocyanate, cycloaliphatischen Diisocyanate, und Mischungen daraus,
   ii) 20 bis 80 Gew.-% eines Makrodioles mit einem Molekulargewicht von 500 bis 10 000 und Gemischen daraus,
   iii) 2 bis 12 Gew.-% 2,2-Bis-(hydroxymethyl)-alkan-monocarbonsäuren, bevorzugt Dimethylolpropionsäure,
   iv) 0 bis 15 Gew.-% kurzkettiger Diole mit einem Molekulargewicht von 62 bis 400,
   v) 0 bis 10 Gew.-% monofunktioneller Alkohole als Kettenregler mit einem Molekulargewicht von 32 bis 350,
b) 0 bis 15 Gew.-% Diamine des Molekulargewichtsbereichs 60 bis 300 als Kettenverlängerer,
c) 0 bis 10 Gew.-% Kettenregler, ausgewählt aus der Gruppe der Monoamine, Alkanolamine und Ammoniak,
d) 0 bis 3 Gew.-% Wasser und
e) 0,1 bis 10 Gew.-% Neutralisationsmittel besteht,
   wobei sich die genannten Prozentangaben zu 100 % ergänzen,
   mit der Maßgabe, daß man in der Prepolymerstufe a) einen Wert von 65 bis 85 %, vorzugsweise 75 bis 80 %, des berechneten NCO-Gehaltes einstellt.

Der erfindungsgemäß einsetzbare Abziehlack kann durch Tauchen, Rakeln, Gießen, Sprühen, Pinseln und anschließendes Trocknen bei 20 bis 100°C, bevorzugt 20 bis 80°C, durch Wärme oder Infrarotlicht appliziert werden.

Als Komponente a) i) des Abziehlackes werden bevorzugt aliphatische und/oder cycloaliphatische Diisocyanate verwendet, wie z. B. Isophorondiisocyanat (IPDI), 4,4'-Dicyclohexylmethandiisocyanat, 1-Methyl-2,4-diisocyanato-cyclohexan und 1-Methyl-2,6-diisocyanato-cyclohexan in beliebigen Mischungsverhältnissen, 1,6-Hexamethylen-diisocyanat und/oder 1,3-Cyclohexan-diisocyanat. Die Mitverwendung von geringen Anteilen an aromatischen Diisocyanaten, wie z. B. 2,4- und 2,6-Toluoldiisocyanat oder 2,4'- und 4,4'-Diphenylmethandiisocyanat, ist ebenfalls möglich.

Als Komponente a) ii) werden Makrodiole mit einem Molekulargewicht von 500 bis 10000 eingesetzt. Hierbei handelt es sich bevorzugt um Polyesterdiole durch Umsetzung von Dicarbonsäuren mit Diolen, gegebenenfalls unter Zuhilfenahme üblicher Veresterungskatalysatoren, vorzugsweise nach dem Prinzip einer Schmelz- oder Azeotropkondensation bei Temperaturen von 140 - 240°C.

Beispiele geeigneter Säuren oder Anhydride sind Adipinsäure, Bernsteinsäure(anhydrid), Maleinsäure(anhydrid), Sebacinsäure, Azelainsäuren, die unterschiedlichsten handelsüblichen Dimerfettsäuren (in hydrierter und nicht-hydrierter Form), Phthalsäure(anhydrid), Isophthalsäure, Tetrahydrophthalsäure(anhydrid), 1,4-Cyclohexandicarbonsäure, Hexahydrophthalsäure(anhydrid). Als Diole kommen die technisch verfügbaren Diole zum Einsatz, wie z. B. Ethylenglykol, 1,2- und 1,3-Propandiol, 1,3- und 1,4-Butandiol, 1,6-Hexandiol, Diethylenglykol, Dipropylenglykol, Neopentylglykol, oder Mischungen derariger Diole. Bevorzugt sind Polyesterdiole aus Adipinsäure, Hexandiol und Neopentylglykol.

Ebenfalls geeignet sind Polycarbonatdiole, Polycaprolactondiole, Hydroxypolytetrahydrofurane oder Hydroxypolyether auf Basis von Propylenoxid.

Geeignete Polycarbonatdiole werden z. B. erhalten, indem Kohlensäurederivate, wie z.B. Diphenylcarbonat oder Phosgen, mit Alkoholen, vorzugsweise Diolen, der genannten Art umgesetzt werden.

Die mittlere Molmasse dieser Polyole liegt zwischen 500 und 10000, bevorzugt zwischen 700 und 4000, besonders bevorzugt sind Makrodiole mit Molmassen zwischen 1000 und 2500.

Bei den Ausgangskomponenten a) iii) handelt es sich bevorzugt um 2,2-Bis-(hydroxymethyl)-alkanmonocarbonsäuren mit insgesamt 5 - 8 Kohlenstoffatomen, d. h. Verbindungen der allgemeinen Formel (I) 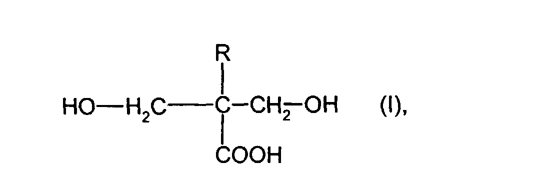 in welcher R für einen Alkylrest mit 1 - 4 Kohlenstoffatomen steht.

Ganz besonders bevorzugt ist 2,2-Dimethylolpropionsäure.

Als Ausgangskomponente a) iv) kommen die beschriebenen kurzkettigen Diole vom Molekulargewicht 62 - 400 in Betracht. Besonders bevorzugt ist 1,4-Butandiol.

Als Ausgangskomponente a) v) kommen in Betracht, Methanol, Ethanol, Butanol, Hexanol, 2-Ethylhexanol, Oktanol und Dodecanol und beliebige Alkohole des Molekulargewichts 32 bis 350.

Als Komponente b) können alle aliphatischen und/oder cycloaliphatischen Verbindungen verwendet werden, die mindestens zwei gegenüber Isocyanaten reaktive Aminogruppen tragen. Hierfür infrage kommen insbesondere Ethylendiamin, Propylendiamin, Hexamethylendiamin, Isophorondiamin, p-Xylylendiamin, 4,4'-Diaminodicyclohexylmethan, und 4,4'-Diamino-3,3 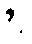 -dimethyldicyclohexylmethan.

Als Komponente c) kommen zum Beispiel Ammoniak, monofunktionelle Amine, wie Methylamin, Ethylamin, n-Propylamin, Isopropylamin, Cyclohexylamin, Octylamin, Diethylamin, Dibutylamin, sowie Aminoalkohole, wie Ethanolamin, Diethanolamin und Propanolamin, in Betracht.

Als Neutralisationsmittel e) sind zum Beispiel Ammoniak, N-Methylmorpholin, Dimethylisopropanolamin, Triethylamin, Dimethylethanolamin, Methyldiethanolamin, Triethanolamin, Morpholin, Tripropylamin, Ethanolamin, Diethanolamin, Triisopropanolamin und Gemische daraus geeignet.

In einer bevorzugten Ausführungsform werden die Komponenten a) i), ii) und iii) in einem Reaktor vorgelegt und unter wasserfreien Bedingungen in einem Temperaturbereich von 50-150°C, bevorzugt 50-110°C, umgesetzt, danach wird abgekühlt und dem Ansatz technisch übliches Aceton sowie das kurzkettige Diol (iv) von MG 62-400 und gegebenenfalls monofunktionelle Alkohole (v) zugegeben und so lange erhitzt, bis der NCO-Gehalt der Mischung auf einen Wert von 65 bis 85 % des berechneten NCO-Gehaltes gefallen ist. Auf diese Weise entsteht das NCO-Prepolymer. Danach wird der Ansatz mit weiterem Aceton verdünnt und mit der berechneten Menge eines Gemisches aus Diamin und Kettenabbrecher - gelöst in Wasser - versetzt. Auf diese Weise setzt man 90 % der NCO-Gruppen mit dem Kettenverlängerer, dem Diamin und dem Kettenabbrecher um. Das verbleibende Isocyanat läßt man mit dem vorhandenen Wasser zum erfindungsgemäßen Polyurethan-Polyharnstoff abreagieren.

Die Polymeraufbaureaktion wird bevorzugt ohne die Verwendung von Katalysatoren durchgeführt, es ist aber auch möglich, die in der Isocyanatchemie bekannten Katalysatoren einzusetzen (z.B. tert.-Amine wie Triethylamin, Zinnverbindungen wie Zinn-II-octoat, Dibutylzinndilaurat u.a. gebräuchliche Katalysatoren).

Wenn kein NCO mehr nachweisbar ist (IR-Kontrolle), gibt man dem Ansatz die berechnete Menge Neutralisationsmittel, bevorzugt Ammoniaklösung, zu, so daß 50-60 % der vorliegenden Carboxylgruppen durch den Ammoniak neutralisiert werden.

Durch Zugabe von Wasser und anschließendem Entfernen des eingesetzten Acetons durch Destillation stellt man die gewünschte Festkörperkonzentration ein. Polyurethan-Polyharnstoffdispersionen, die nach dem erfindungsgemäßen Verfahren gewonnen werden, besitzen 20 - 60 Gew.% Feststoff, bevorzugt 30 - 40 Gew.% Feststoff, in Wasser; ihre mittleren Teilchendurchmesser betragen 20-1.000 nm, bevorzugt 50 - 500 nm.

Die pH-Werte der weißen, erfindungsgemäßen lagerstabilen Polyurethan-Polyharnstoffdispersionen liegen im Bereich von 6 - 9, vorzugsweise bei etwa 7.

Die erfindungsgemäßen Polyharnstoffdispersionen liefern nach der physikalischen Trocknung bei 20 - 100°C, bevorzugt 20 - 80°C, transparente hochglänzende, UV-beständige, temperaturbeständige (-35 bis 80°C), gegen Niederschläge (organischer oder anorganischer Natur) resistente Lacke, die einerseits gut haften andererseits durch Abziehen leicht entfernt werden können. Die Reißfestigkeit und Dehnung der Lackschichten ist angemessen hoch.

Bei der Formulierung der Lacke können die in der Lackchemie üblichen Hilfsmittel, wie z.B. Pigmente, Lichtstabilisatoren, Antiabsetzmittel, Verdicker, oberflächenaktive Verbindungen, Entschäumer, etc. eingesetzt werden.

Die Abziehlackschichten können nach Aufbringung auf die Trägerfläche und Trocknung mit Selbstklebeetiketten oder Klebefolie beklebt werden oder direkt mit Sprühlacken dekoriert werden. Sie können ferner hervorragend mit Permanent-Tintenstiften, wie sie z.B. unter den Bezeichnungen Edding-Stifte oder Lumocolor-Stifte bekannt sind, beschriftet werden, ohne daß die Permanenttinte auf die Trägerfläche durchschlägt. Zur Erzielung besonderer Effekte kann der hochtransparente Abziehlack auch mit Pigmenten zur Erzielung farbiger oder deckender Abziehlackfilme eingefärbt werden.

Sind besondere Anforderungen an die Widerstandsfähigkeit und Haltbarkeit des Flächendekors zu stellen, kann es zweckmäßig sein, die Abziehlackschicht lediglich unter Teilflächen der Dekorfläche, d.h. der Klebefolie, aufzubringen. Insbesondere kann es zweckmäßig sein, die Klebefolie seitlich über die Abziehlackschicht um einige Millimeter überstehen zu lassen, so daß sich im Randbereich der Klebefolie eine festsitzende Klebeschicht-Haftung zur Trägerfläche ergibt.

## Patentansprüche

1. Mit einem Flächendekor versehener Trägerflächenabschnitt, gekennzeichnet durch eine zwischen Trägerfläche und Dekorfläche angeordnete, von der Trägerfläche abziehbare Lackschicht aus colöserfreien, wäßrigen anionischen Polyurethan-Polyharnstoffdispersionen.

2. Flächenabschnitt nach Anspruch 1, wobei die Trägerfläche aus Glas, Metall, Papier, Pappe, Leder, Holz, Kunststoff, Lack oder Email besteht.

3. Flächenabschnitt nach Anspruch 1 oder 2, wobei das Flächendekor eine Klebefolie, eine farbige Lackierung oder eine Permanent-Tintenzeichnung darstellt.

4. Flächenabschnitt nach Anspruch 1 oder 2, wobei das Flächendekor eine Klebefolie ist, die die abziehbare Lackschicht im Randbereich überragt.
